# EUROPÄISCHE PATENTSCHRIFT

(11) **EP 3 862 831 B1**
(45) Veröffentlichungstag und Bekanntmachung des Hinweises auf die Patenterteilung: **29.03.2023**
(21) Anmeldenummer: 20155398.9
(22) Anmeldetag: 04.02.2020
(51) Int. Cl.: G05B 19/418, G05B 19/042

(54) **LEITSYSTEM FÜR TECHNISCHE ANLAGEN**
CONTROL SYSTEM FOR TECHNICAL INSTALLATIONS
SYSTÈME DE COMMANDE POUR INSTALLATIONS TECHNIQUES

(43) Veröffentlichungstag der Anmeldung: 11.08.2021
(73) Patentinhaber: Siemens Aktiengesellschaft, 80333 München (DE)
(72) Erfinder: Rosskopf, Harald, 76228 Karlsruhe-Wolfartsweier (DE)
(74) Vertreter: Siemens Patent Attorneys

(56) Entgegenhaltungen:
- EP-A2- 2 701 019
- US-A1- 2008 154 393

## Beschreibung

Die Erfindung betrifft ein Leitsystem für eine technische Anlage, insbesondere eine Fertigungs- oder Prozessanlage, das wenigstens einen Operator Station Server und einen Operator Station Client aufweist, mit den Merkmalen des Anspruchs 1. Außerdem betrifft die Erfindung eine technische Anlage, insbesondere eine Fertigungs- oder Prozessanlage, mit den Merkmalen des Anspruchs 3. Zudem betrifft die Erfindung ein Verfahren zum Betrieb eines Leitsystems mit den Merkmalen des Anspruchs 4.

Es wird von einem Leitsystem einer technischen Anlage ausgegangen, das wenigstens einen Operator Station Server und einen damit verbundenen Operator Station Client aufweist. Der Operator Station Server ist dabei dazu ausgebildet, visuelle Informationen zu generieren und diese an den Operator Station Client weiterzuleiten, damit ein Operator des Leitsystems die visuellen Informationen im Kontext eines Bedienens und Beobachtens der technischen Anlage dargeboten bekommt.

Wenn strukturelle Informationen eines Leitsystems einer technischen Anlage wie beispielsweise ein SFC-Ablaufplan (SFC = Sequential Function Chart) in einem als Operator Station Client fungierenden Webbrowser von dem Operator des Leitsystems erstellt und verändert werden, kommt es aus den folgenden Gründen regelmäßig zu Zeitverzögerungen. Der Webbrowser schickt ein von dem Operator der technischen Anlage getriggertes Kommando zu dem mit dem Operator Station Client verbundenen Operator Station Server. Der Operator Station Server führt die durch das Kommando bezweckte Operation in einem auf dem Operator Station Server hinterlegten Datenmodell durch. Daraufhin erzeugt der Operator Station Server überarbeitete Visualisierungsinformationen, die wieder an den Webbrowser bzw. den Operator Station Client übertragen werden.

Die Zeit, die zwischen dem Triggern des Kommandos und dem Empfangen der überarbeiteten Visualisierungsinformationen vergeht, ist nicht konstant bzw. schwer definierbar. Bei der Manipulation von grafischen Strukturen in dem Webbrowser spielt die Funktionalität "Drag & Drop" jedoch eine wichtige Rolle. Dabei wird ein von dem Webbrowser grafisch dargestelltes Objekt scheinbar mit der Bewegung der Computermaus durch den Operator verschoben: das Objekt "hängt" an der Maus. Der Webbrowser simuliert z.B. beim Verschieben die Bewegung des grafischen Objektes.

Wenn hierarchische, automatisch geordnete Diagramme wie die SFC-Struktur bei SIMATIC Batch der Firma SIEMENS verändert werden, kann zusätzlich das Problem auftreten, dass die Grafik "pumpt". Dies bedeutet, dass die grafischen Objekte um die Zielposition eines zu verschiebenden Objekts herum auch an eine neue Position verschoben werden müssen, um Platz für das verschobene Objekt zu schaffen. Solange die Strecke "Kommando im Webbrowser triggern -> Übertragung an Operator Station Server -> Überarbeitung des Modells auf dem Server -> Übertragung zurück an den Webbrowser" jedoch noch nicht durchlaufen ist, bleibt der alte Zustand der grafischen Darstellung im Webbrowser nach dem Triggern eines Kommandos bzw. dem Verschieben eines grafischen Objekts noch erhalten, bis die vom Operator Station Server übertragene, überarbeitete Darstellung von dem Webbrowser empfangen wird. Der Operator muss daher warten, bis die überarbeitete Darstellung angezeigt wird, und darf keine neuen Kommandos triggern. Andernfalls könnte es dazu kommen, dass ihm, wenn er ein grafisches Objekt zu selektieren versucht, das Objekt "unter der Hand weggeschoben wird". Die intendierte Illusion "das Objekt befindet sich in der Hand (=an der Computermaus) des Operators und er schiebt es an eine neue Stelle" geht verloren, wenn das Objekt nach dem Verschieben nicht an der neuen Position verbleibt, sondern für kurze Zeit (bis die zuvor erläuterte Strecke durchlaufen ist) an der alten Position angezeigt wird.

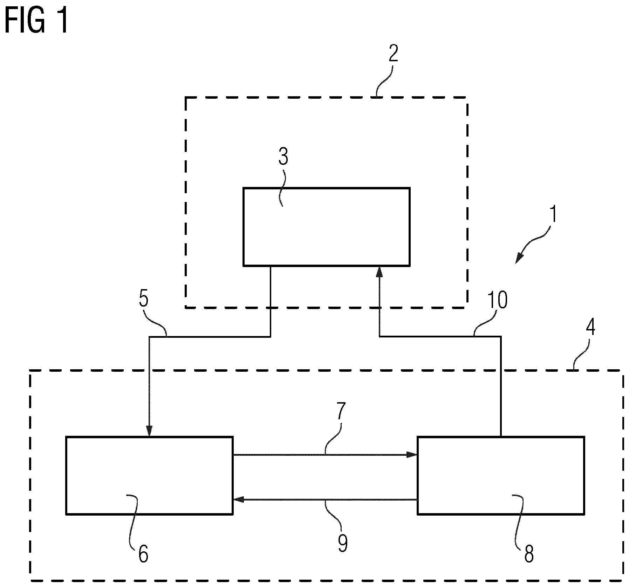

Aktuelle Entwicklungen im Bereich eines mittels eines Webbrowser bedienbaren Leitsystems folgen dem sogenannten MVC-Schema 1, welches in FIG 1 veranschaulicht ist (MVC = Model View Controller). Auf einem Operator Station Server 2 ist ein (Daten-)Modell 3 (Model) hinterlegt. Der Operator Station Server 2 ist mit einem Operator Station Client 4 verbunden, auf welchem ein Webbrowser implementiert ist. Der Operator Station Client 4 weist eine Anzeigeeinheit 6 (View) und eine Steuereinheit 8 (Control) auf. Der Operator Station Server 2 übermittelt das Datenmodell 3 betreffende Visualisierungsinformationen 5 an die Anzeigeneinheit 6 des Operator Station Clients 4 bzw. des Webbrowsers. Dieser stellt einem Operator des Leitsystems die von dem Modell 3 stammenden Visualisierungsinformationen grafisch dar.

Die Anzeigeeinheit 6 stellt darüber hinaus dem Operator eine Benutzerschnittstelle bereit, mittels der der Operator Kommandos 7 wie das grafische Verschieben von dargestellten grafischen Objekten innerhalb der grafischen Darstellung triggern kann. Die Kommandos 7 werden an die Steuereinheit 8 innerhalb des Operator Station Clients 4 weitergeleitet. Die Steuereinheit 8 verarbeitet die Kommandos 7 des Nutzers und übermittelt in manchen Fällen der Anzeigeeinheit 6 direkt aktualisierte Visualisierungsinformationen (symbolisiert durch Pfeil 9). Dabei handelt es sich bei den Fällen zumeist um einfache Formatierungskommandos 7 des Operators, beispielsweise die Änderung einer Schriftart oder einer Schriftfarbe in der Darstellung der Anzeigeeinheit 6.

Komplexere Kommandos 7 wie die Neuerzeugung von grafischen Objekten oder eine Änderung einer Hierarchie zwischen den grafischen Objekten betreffen eine Struktur des Modells 3 auf dem Operator Station Server 2. Diese werden von der Steuereinheit 8 mittels eines Anpassungskommandos 10 an das (Daten-)Modell 3 übermittelt - mit der Absicht, das (Daten-)Modell 3 auf dem Operator Station Server 2 zu überarbeiten. Nach der Anpassung des Modells 3 werden wiederum aktualisierte Visualisierungsinformationen 5 an die Anzeigeeinheit 6 übertragen. Das Kommando 7 eines Operators führt daher in bestimmten Fallkonstellationen dazu, dass zweimal über die Grenze "Server-Client" hinweg Daten übertragen werden müssen, was zu den vorstehend erläuterten Nachteilen führen kann.

Es wäre möglich, die durch das Kommando 7 getriggerten Operationen doppelt durchzuführen: Zum einen an der Darstellung in der Anzeigeeinheit 6 mittels der direkten Rückführung 9 von der Steuereinheit 8, und zum anderen über das Anpassungskommando 10 zu dem Modell 3 auf dem Operator Station Server 2. Dadurch würde die Reaktion auf das Kommando 7 des Operators sofort, d.h. ohne signifikante Verzögerung, erfolgen. Die beiden Operationen können aber auseinanderlaufen. Dies würde bedeuten, dass in dem Modell 3 auf dem Operator Station Server 2 andere Informationen vorliegen als sie dem Operator mittels der Anzeigeeinheit 6 dargestellt werden.

Unterschiedliche Implementierungen der beiden Operationen oder zeitliche Probleme können also eine Inkonsistenz zwischen "Model" und "View" im MVC-Schema herbeiführen. Dies kann unter anderem dazu führen, dass der Operator in der Zeit zwischen dem Triggern des Kommandos 7 und dem Erhalt der überarbeiteten Visualisierungsinformationen von dem Operator Station Server 2 bestimmte grafische Objekte in der Darstellung des Webbrowsers auswählen kann, die gemäß dem überarbeiteten Modell 3 auf dem Operator Station Server 2 dem Operator eigentlich nicht mehr dargeboten werden sollen. Diese Diskrepanz kann sich negativ auf die Bedienbarkeit des Leitsystems auswirken.

Ein direktes Übermitteln des Kommandos 7 des Operators und der damit bezweckten Operationen an das Modell 3 auf dem Operator Station Server 2 (d.h. ohne Einbezug der Steuereinheit 8) würde den Prinzipien des MVC-Modells widersprechen, da hier keine direkte Modifikation des Modells 3 durch die Anzeigeeinheit 6 vorgesehen ist.

Zudem wäre es möglich, keine direkte Rückmeldung von der Steuerungseinheit 8 zu der Anzeigeeinheit 6 zu erlauben. Damit wäre eine Inkonsistenz der Visualisierungsinformationen zwischen Anzeigeeinheit 6 und Modell 3 zwar ausgeschlossen, allerdings würde das Leitsystem insbesondere aufgrund des längeren Signallaufwegs deutliche Einbußen hinsichtlich Performanz hinnehmen müssen.

US 2008/154393 A1 offenbart ein Verfahren zum Anzeigen von Prozessinformationen einer technischen Anlage, wobei die Prozessinformationen mittels eines Servers an mehrere Clients gesendet werden und mit Hilfe von zuvor definierten Datenmodellen angezeigt werden.

EP 2 701 019 A2 offenbart ein Verfahren zur Parametrierung eines Feldgerätes, das die sichere Übergabe von Parameterwerten über eine unsichere Datenverbindung erlaubt, wobei mittels Prüfwerte die übertragene Parametrierwerte geprüft werden.

Der Erfindung liegt die Aufgabe zugrunde, ein Leitsystem für eine technische Anlage, insbesondere Fertigungs- oder Prozessanlage, anzugeben, das eine Konsistenz von Visualisierungsinformationen im Kontext einer Server-Client Verbindung unter Beachtung des MVC-Schemas und ohne signifikante Einbußen hinsichtlich Performanz ermöglicht.

Diese Aufgabe wird gelöst durch ein Verfahren gemäß Anspruch 1, ein Leitsystem gemäß Anspruch 3 und eine technische Anlage gemäß Anspruch 5. Vorteilhafte Weiterbildungen ergeben sich aus den abhängigen Ansprüchen.

Ein Leitsystem der eingangs beschriebenen Art weist wenigstens einen Operator Station Server und einen Operator Station Client auf, wobei auf dem Operator Station Server ein Datenmodell implementiert ist, und wobei der Operator Station Client eine Anzeigeeinheit und eine Steuereinheit aufweist, wobei:
- der Operator Station Server dazu ausgebildet ist, das Datenmodell repräsentierende Visualisierungsinformationen an die Anzeigeeinheit des Operator Station Clients zu übermitteln,
- die Anzeigeeinheit des Operator Station Clients dazu ausgebildet ist, eine grafische Darbietung der empfangenen Visualisierungsinformationen für einen Operator des Leitsystems zu erzeugen,

- die Anzeigeeinheit des Operator Station Clients dazu ausgebildet ist, das Datenmodell betreffende Kommandos von dem Operator entgegenzunehmen und diese an die Steuereinheit weiterzuleiten,
- die Steuereinheit dazu ausgebildet ist, die Kommandos von der Anzeigeeinheit entgegenzunehmen,
- die Steuereinheit dazu ausgebildet ist, aus den entgegengenommenen Kommandos überarbeitete Visualisierungsinformationen zu erzeugen und diese direkt an die Anzeigeeinheit zu übermitteln, um die grafische Darbietung der Anzeigeeinheit anzupassen,
- und die Steuereinheit dazu ausgebildet ist, aus den entgegengenommenen Kommandos Anpassungskommandos zu erzeugen und diese direkt an das Datenmodell auf dem Operator Station Server zu übermitteln, um das Datenmodell in Reaktion auf das Kommando des Operators anzupassen.

Das Leitsystem ist dadurch gekennzeichnet, dass die Anzeigeeinheit dazu ausgebildet ist, nach dem Erhalt der überarbeiteten Visualisierungsinformationen von der Steuereinheit und der darauffolgenden Anpassung der grafischen Darbietung eine für die aktuelle grafische Darbietung spezifische Prüfsumme zu erzeugen. Und es ist dadurch gekennzeichnet, dass der Operator Station Server dazu ausgebildet ist, nach dem Erhalt der Anpassungskommandos von der Steuereinheit und der darauffolgenden Anpassung des Datenmodells eine für das aktuelle Datenmodell spezifische Prüfsumme zu erzeugen und an die Anzeigeeinheit zu übermitteln, wobei die Anzeigeeinheit dazu ausgebildet ist, die von ihr erzeugte Prüfsumme mit der von dem Operator Station Server übermittelte Prüfsumme zu vergleichen, um eine eventuelle Inkonsistenz zwischen der grafischen Darbietung der Anzeigeeinheit und dem Datenmodell auf dem Operator Station Server erkennen zu können, und um im Falle einer Inkonsistenz eine Übermittlung der das aktuelle Datenmodell repräsentierenden Visualisierungsinformationen von dem Operator Station Server anzufordern.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Bei dem "Datenmodell" handelt es sich um eine Verknüpfung verschiedener Daten, die in einem gemeinsamen Modell zusammengefasst sind. Sie sind auf dem Operator Station Server implementiert. Mit anderen Worten: Das Datenmodell ist in einem Speicher des Operator Station Server hinterlegt. Dieser Speicher kann sich physikalisch auch außerhalb des Operator Station Servers befinden, beispielsweise in einer Cloudumgebung.

Mittels des erfindungsgemäßen Leitsystems kann die Anzeigeeinheit in Verbindung mit der Steuereinheit eine unmittelbare Reaktion auf das Kommando des Operators bereitstellen, indem die grafische Darbietung nahezu ohne Verzögerung dem Kommando des Operators entsprechend angepasst wird. Zugleich besteht durch die Erzeugung der Prüfsummen und den Abgleich die Gewissheit, dass das, was dem Operator in Reaktion auf sein Kommando grafisch dargeboten wird, auch korrekt ist, d.h. in Übereinstimmung mit dem darzustellenden Datenmodell auf dem Operator Station Server ist. Das erfindungsgemäße Leitsystem zeichnet sich dabei durch eine verbesserte Bedienbarkeit aus, ohne das MVC-Schema zu verletzen. Das Leitsystem ist "flüssig" zu bedienen und garantiert dabei eine Konsistenz der mittels des Operator Station Clients grafisch dargebotenen Visualisierungsinformationen mit dem zugrundeliegenden Datenmodell auf dem Operator Station Server.

Der Erzeugungsalgorithmus für die Prüfsummen ist vorteilhafterweise so ausgelegt, dass alle Kommandos des Operators, die eine Änderung der grafischen Darbietung bewirken, auch in die Erzeugung der Prüfsummen miteinbezogen werden. Hierfür ist insbesondere ein "Message-Digest Algorithm 5" (kurz: MD5) Verfahren vorteilhaft einsetzbar. Dieses Verfahren berücksichtigt unter anderem auch reine grafische Verschiebeoperationen durch den Operator.

Die zuvor gestellte Aufgabe wird zudem gelöst durch eine technische Anlage, insbesondere eine Fertigungs- oder Prozessanlage, mit wenigstens einem Leitsystem, das wie zuvor erläutert ausgebildet ist.

Außerdem wird die zuvor gestellte Aufgabe gelöst durch ein Verfahren zum Betrieb eines Leitsystems für eine technische Anlage, insbesondere eine Fertigungs- oder Prozessanlage, das wenigstens einen Operator Station Server und einen Operator Station Client aufweist, wobei auf dem Operator Station Server ein Datenmodell implementiert ist, und wobei der Operator Station Client eine Anzeigeeinheit und eine Steuereinheit aufweist, umfassend:
a) Übermitteln von das Datenmodell repräsentierenden Visualisierungsinformationen an die Anzeigeeinheit des Operator Station Clients durch den Operator Station Server,
b) Erzeugen einer grafischen Darbietung der empfangenen Visualisierungsinformationen für einen Operator des Leitsystems durch die Anzeigeeinheit des Operator Station Clients,
c) Entgegennehmen von Kommandos des Operators, die eine Änderung der grafischen Darbietung in der Anzeigeeinheit bewirken sollen, und Weiterleiten dieser Kommandos an die Steuereinheit durch die Anzeigeeinheit,
d) Entgegennehmen der Kommandos von der Anzeigeeinheit durch die Steuereinheit,
e) Erzeugen von überarbeiteten Visualisierungsinformationen aus den entgegengenommenen Visualisierungsinformationen und direktes Übermitten der überarbeiteten Visualisierungsinformationen an die Anzeigeeinheit durch die Steuereinheit, um die grafische Darbietung der Anzeigeeinheit anzupassen,
f) Erzeugen von Anpassungskommandos aus den entgegengenommenen Kommandos und direkte Übermittlung an das Datenmodell auf dem Operator Station Server durch die Steuereinheit, damit der Operator Station Server das Datenmodell in Reaktion auf das Kommando des Operators anpasst,
g) Erzeugen einer für die aktuelle grafische Darbietung spezifischen Prüfsumme durch die Anzeigeeinheit, nachdem die Anzeigeeinheit die überarbeiteten Visualisierungsinformationen von der Steuereinheit erhalten und die grafische Darbietung daraufhin entsprechend angepasst hat,
h) Erzeugen einer für das aktuelle Datenmodell spezifischen Prüfsumme durch den Operator Station Server, nachdem der Operator Station Server die Anpassungskommandos von der Steuereinheit erhalten und das Datenmodell daraufhin entsprechend angepasst hat,
i) Übertragen der Prüfsumme von dem Operator Station Server zu der Anzeigeeinheit,
j) Vergleichen der von der Anzeigeeinheit erzeugten Prüfsumme mit der von dem Operator Station Server erzeugten Prüfsumme, um eine eventuelle Inkonsistenz zwischen der grafischen Darbietung der Anzeigeeinheit und dem Datenmodell auf dem Operator Station Server erkennen zu können,
k) Im Falle einer Inkonsistenz zwischen den beiden miteinander verglichenen Prüfsummen, Anfordern von Visualisierungsinformationen, die das aktuelle Datenmodell repräsentieren, von dem Operator Station Server durch die Anzeigeeinheit,
l) Übertragen der Visualisierungsinformationen, die das aktuelle Datenmodell repräsentieren, von dem Operator Station Server zu der Anzeigeeinheit und grafische Darbietung der Visualisierungsinformationen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein MVC-Schema gemäß dem Stand der Technik;
- FIG 2: von einem Anzeigeeinheit eines Operator Station Clients grafisch dargebotene Visualisierungsinformationen;
- FIG 3: die Visualisierungsinformationen aus FIG 2 gemäß einem weiteren Aspekt;
- FIG 4: die Visualisierungsinformationen aus FIG 3 gemäß einem weiteren Aspekt; und
- FIG 5: den Ablauf eines erfindungsgemäßen Verfahrens.

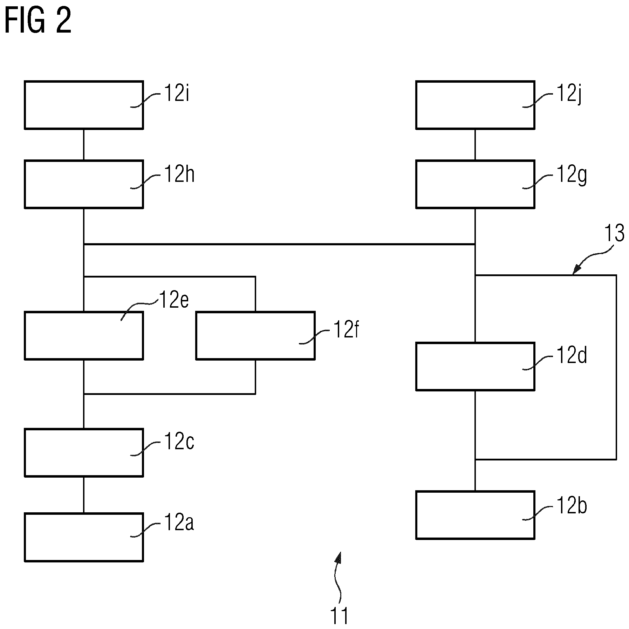

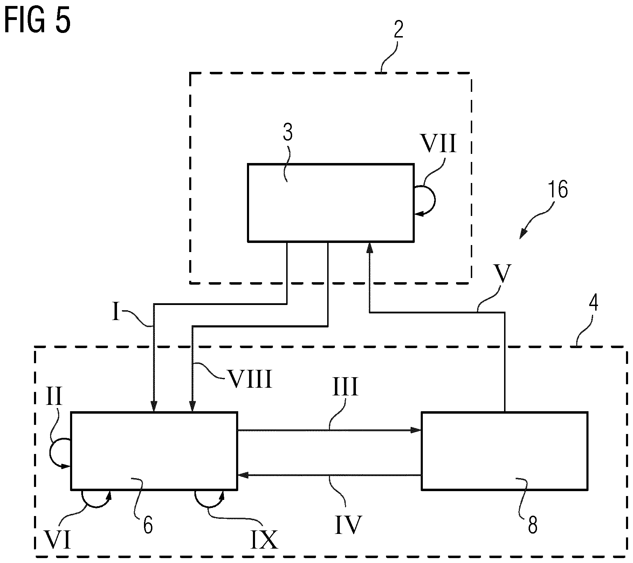

In FIG 2 sind Visualisierungsinformationen 11 dargestellt, die zu einem Datenmodell 3 korrespondieren, das auf einem Operator Station Server 2 dargestellt ist (vgl. hierzu auch FIG 5). Die Visualisierungsinformationen umfassen zehn grafische Objekte 12a, 12b, 12c, 12d, 12e, 12f, 12g, 12h, 12i, 12j. Diese sind durch Verbindungslinien 13 grafisch miteinander verknüpft. Es kann sich hierbei beispielsweise um die grafische Darbietung eines SFC-Diagramms handeln (SFC = Sequential Function Chart), welches eine zustands- oder ereignisgesteuerte Ausführung von Produktionsprozessen auf Basis von Ablaufketten in einer als verfahrenstechnische Anlage ausgebildeten technischen Anlage ermöglicht.

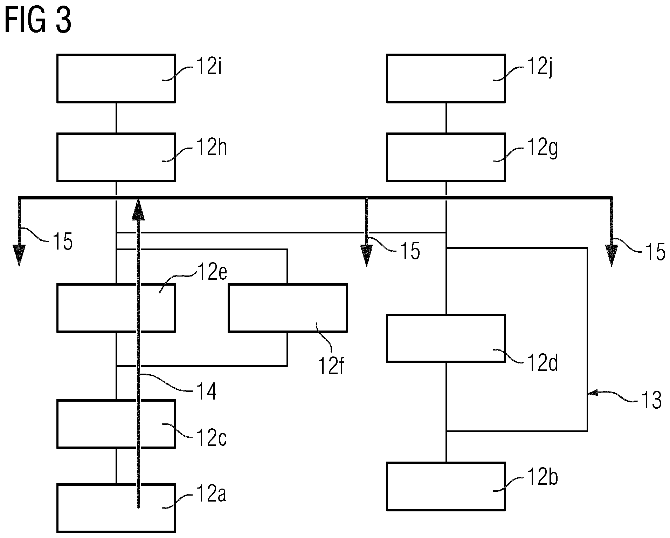

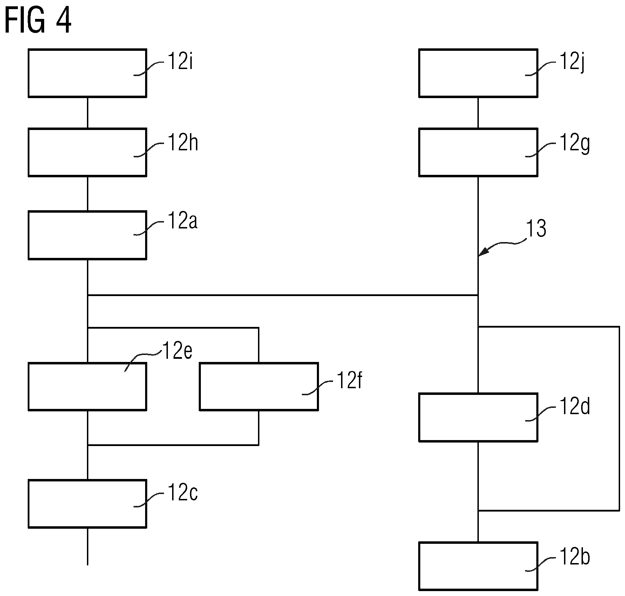

Ein Operator möchte nun beispielhaft ein Objekt 12a (in FIG 2 in der Zeichenfläche links unten) grafisch in der Zeichenfläche nach oben verschieben, so dass es unterhalb des Objekts 12h angeordnet ist. FIG 3 zeigt hierbei, dass das Objekt 12a entlang einer Richtung 14 nach oben verschoben werden soll, während die Objekte mit den dazugehörigen Verbindungslinien 13 entlang einer entgegenlaufenden Richtung 15 nach unten verschoben werden sollen, um dem Objekt 12a den nötigen Platz innerhalb der Visualisierungsinformationen 11 zu bereiten. FIG 4 zeigt den neuen Platz des Objekts 12a.

Anhand FIG 5 wird im Folgenden erläutert, welche Operationen automaisch im Hintergrund ablaufen, während der Operator das zuvor erläuterte (Verschiebe-)Kommando gibt. FIG 5 zeigt ein Leitsystem 16, welches einen Operator Station Server 2 und einen hiermit verbundenen Operator Station Client 4 aufweist. In dem Operator Station Server 2 ist ein Datenmodell 3 implementiert. Der Operator Station Client 4 weist eine Anzeigeeinheit 6 und eine Steuereinheit 8 auf.

In einem ersten Verfahrensschritt I werden durch den Operator Station Server 2 das Datenmodell 3 repräsentierende Visualisierungsinformationen 11 an die Anzeigeeinheit 6 des Operator Station Clients 4 übermittelt.

In einem zweiten Verfahrensschritt II erzeugt die Anzeigeeinheit 6 die in FIG 2 visualisierte grafische Darbietung der empfangenen Visualisierungsinformationen 11 für den Operator des Leitsystems 16.

Die Anzeigeeinheit 6 nimmt ein (Verschiebe-)Kommando des Operators entgegen und leitet dieses Kommando in einem dritten Verfahrensschritt III an die Steuereinheit 8 des Operator Station Clients 8 weiter.

Nach dem Entgegennehmen des Kommandos von der Anzeigeeinheit 6 durch die Steuereinheit 8 erzeugt die Steuereinheit 8 überarbeitete Visualisierungsinformationen 11 aus den entgegengenommenen Kommandos und übermittelt direkt die überarbeiteten Visualisierungsinformationen 11 an die Anzeigeeinheit 6, um die grafische Darbietung der Anzeigeeinheit 6 anzupassen (vierter Verfahrensschritt IV).

Zusätzlich erzeugt die Steuereinheit 8 Anpassungskommandos aus den entgegengenommenen Kommandos und übermittelt diese in einem fünften Verfahrensschritt V direkt an das Datenmodell 3 auf dem Operator Station Server 2, damit der Operator Station Server 2 das Datenmodell 3 in Reaktion auf das Kommando des Operators anpasst.

In einem sechsten Verfahrensschritt VI erzeugt die Anzeigeeinheit 6 eine für die aktuelle grafische Darbietung spezifische Prüfsumme, nachdem die Anzeigeeinheit 6 die überarbeiteten Visualisierungsinformationen 11 von der Steuereinheit 8 erhalten und die grafische Darbietung daraufhin entsprechend angepasst hat.

In einem siebten Verfahrensschritt VII, der vor, nach oder parallel zu dem sechsten Verfahrensschritt VI ablaufen kann, erzeugt der Operator Station Server 2 eine für das aktuelle, anhand des Anpassungskommandos überarbeitete Datenmodell 3 spezifische Prüfsumme, nachdem der Operator Station Server 2 die Anpassungskommandos von der Steuereinheit 8 erhalten und das Datenmodell 3 daraufhin entsprechend angepasst hat.

In einem achten Verfahrensschritt VIII wird die Prüfsumme von dem Operator Station Server 2 zu der Anzeigeeinheit 6 übertragen.

In einem neunten Verfahrensschritt IX vergleicht die Anzeigeeinheit 6 die von der Anzeigeeinheit 6 erzeugte Prüfsumme mit der von dem Operator Station Server 2 erzeugten Prüfsumme, um eine eventuelle Inkonsistenz zwischen der grafischen Darbietung der Anzeigeeinheit 6 und dem Datenmodell 3 auf dem Operator Station Server 2 erkennen zu können.

Die beschriebenen Verfahrensschritte können beliebig oft wiederholt werden.

Im Falle einer Inkonsistenz zwischen den beiden miteinander verglichenen Prüfsummen kann die Anzeigeeinheit 6 Visualisierungsinformationen 11, die das aktuelle Datenmodell 3 repräsentieren, von dem Operator Station Server 2 anfordern, woraufhin die Visualisierungsinformationen 11, die das aktuelle Datenmodell 3 repräsentieren, von dem Operator Station Server 2 zu der Anzeigeeinheit 6 übertragen werden und die (korrekten) Visualisierungsinformationen 11 grafisch dargeboten werden. Auf eine Bezeichnung der letzten Verfahrensschritte in FIG 5 wurde aus Übersichtlichkeitsgründen verzichtet. Auch diese Verfahrensschritte können im Falle auftretender Inkonsistenzen beliebig oft wiederholt werden.

## Patentansprüche

1. Verfahren zum Betrieb eines Leitsystems (16) für eine technische Anlage, insbesondere eine Fertigungs- oder Prozessanlage, das wenigstens einen Operator Station Server (2) und einen Operator Station Client (4) aufweist, wobei auf dem Operator Station Server (2) ein Datenmodell (3) implementiert ist, wobei das Datenmodell (3) eine Verknüpfung verschiedener Daten darstellt, die in einem gemeinsamen Modell zusammengefasst sind, und wobei der Operator Station Client (4) eine Anzeigeeinheit (6) und eine Steuereinheit aufweist, umfassend:
a) Übermitteln von das Datenmodell (3) repräsentierenden Visualisierungsinformationen (5) an die Anzeigeeinheit (6) des Operator Station Clients (4) durch den Operator Station Server (2),
b) Erzeugen einer grafischen Darbietung der empfangenen Visualisierungsinformationen (5) für einen Operator des Leitsystems (16) durch die Anzeigeeinheit (6) des Operator Station Clients(4),
c) Entgegennehmen von Kommandos des Operators, die eine Änderung der grafischen Darbietung in der Anzeigeeinheit (6) bewirken sollen, und Weiterleiten dieser Kommandos (7) an die Steuereinheit (8) durch die Anzeigeeinheit (6),
d) Entgegennehmen der Kommandos (7) von der Anzeigeeinheit (6) durch die Steuereinheit (8),
e) Erzeugen von überarbeiteten Visualisierungsinformationen (9) aus den entgegengenommenen Kommandos (7) und direktes Übermitteln der überarbeiteten Visualisierungsinformationen (9) an die Anzeigeeinheit (6) durch die Steuereinheit (8), um die grafische Darbietung der Anzeigeeinheit (6) anzupassen,
f) Erzeugen von Anpassungskommandos (10) aus den entgegengenommenen Kommandos (7) und direkte Übermittlung an das Datenmodell (3) auf dem Operator Station Server (2) durch die Steuereinheit (8), damit der Operator Station Server (2) das Datenmodell (3) in Reaktion auf die Kommandos (7) des Operators anpasst,
g) Erzeugen einer für die aktuelle grafische Darbietung spezifischen Prüfsumme durch die Anzeigeeinheit (6), nachdem die Anzeigeeinheit (6) die überarbeiteten Visualisierungsinformationen (5) von der Steuereinheit (8) erhalten und die grafische Darbietung daraufhin entsprechend angepasst hat,
h) Erzeugen einer für das aktuelle Datenmodell (3) spezifischen Prüfsumme durch den Operator Station Server (2), nachdem der Operator Station Server (2) die Anpassungskommandos (10) von der Steuereinheit (8) erhalten und das Datenmodell (3) daraufhin entsprechend angepasst hat,
i) Übertragen der Prüfsumme von dem Operator Station Server (2) zu der Anzeigeeinheit (6),
j) Vergleichen der von der Anzeigeeinheit (6) erzeugten Prüfsumme mit der von dem Operator Station Server (2) erzeugten Prüfsumme, um eine eventuelle Inkonsistenz zwischen der grafischen Darbietung der Anzeigeeinheit (6) und dem Datenmodell (3) auf dem Operator Station Server (2) erkennen zu können,
k) Im Falle einer Inkonsistenz zwischen den beiden miteinander verglichenen Prüfsummen, Anfordern von Visualisierungsinformationen (5), die das aktuelle Datenmodell (3) repräsentieren, von dem Operator Station Server (2) durch die Anzeigeeinheit (6),
l) Übertragen der Visualisierungsinformationen (5), die das aktuelle Datenmodell (3) repräsentieren, von dem Operator Station Server (2) zu der Anzeigeeinheit (6) und grafische Darbietung der Visualisierungsinformationen (5).

2. Verfahren nach Anspruch 1, bei dem bei der Erzeugung der Prüfsummen durch die Anzeigeeinheit (6) und den Operator Station Server (2) jeweils ein "Message-Digest Algorithm 5" verwendet wird.

3. Leitsystem (16) für eine technische Anlage, insbesondere eine Fertigungs- oder Prozessanlage, das wenigstens einen Operator Station Server (2) und einen Operator Station Client (4) aufweist, wobei auf dem Operator Station Server (2) ein Datenmodell (3) implementiert ist, wobei das Datenmodell (3) eine Verknüpfung verschiedener Daten darstellt, die in einem gemeinsamen Modell zusammengefasst sind, und wobei der Operator Station Client (4) eine Anzeigeeinheit (6) und eine Steuereinheit (8) aufweist, und wobei das Leitsystem zur Durchführung des Verfahrens Anspruch 1 ausgebildet ist.

4. Leitsystem nach Anspruch 3, bei dem die Anzeigeeinheit (6) und der Operator Station Server (2) dazu ausgebildet sind, bei der Erzeugung der Prüfsummen durch die Anzeigeeinheit (6) und den Operator Station Server (2) jeweils ein "Message-Digest Algorithm 5" zu verwenden.

5. Technische Anlage, insbesondere eine Fertigungs- oder Prozessanlage, mit wenigstens einem Leitsystem (16) gemäß einem der Ansprüche 3 oder 4.

## Claims

1. Method for operating a control system (16) for a technical plant, in particular a manufacturing or process plant, which has at least one operator station server (2) and one operator station client (4), wherein a data model (3) is implemented on the operator station server (2), wherein the data model (3) features a linkage of different data which is combined in a common model, and wherein the operator station client (4) has a display unit (6) and a control unit, comprising
a) Transmission of visualisation information (5) representing the data model (3) to the display unit (6) of the operator station client (4) by the operator station server (2),
b) Generation by the display unit (6) of the operator station client (4) of a graphical presentation of the received visualisation information (5) for an operator of the control system (16),
c) Receiving of operator commands to change the graphical presentation in the display unit (6), and forwarding of these commands (7) to the control unit (8) by the display unit (6),
d) Receiving of the commands (7) from the display unit (6) by the control unit (8)
e) Generation of revised visualisation information (9) from the received commands (7) and direct transmission of the revised visualisation information (9) to the display unit (6) by the control unit (8) in order to adjust the graphical presentation of the display unit (6),
f) Generation of adjustment commands (10) from the received commands (7) and transmission thereof directly to the data model (3) on the operator station server (2) by the control unit (8) so that the operator station server (2) adjusts the data model (3) in response to the operator's commands (7),
g) Generation of a checksum specific to the current graphical presentation by the display unit (6) after the display unit (6) has received the revised visualisation information (5) from the control unit (8) and has then adjusted the graphical presentation accordingly,
h) Generation of a checksum specific to the current data model (3) by the operator station server (2) after the operator station server (2) has received the adjustment commands (10) from the control unit (8) and has then adjusted the data model (3) accordingly,
i) Transferring of the checksum from the operator station server (2) to the display unit (6),
j) Comparing of the checksum generated by the display unit (6) with the checksum generated by the operator station server (2) in order to be able to detect any inconsistency between the graphical presentation of the display unit (6) and the data model (3) on the operator station server (2),
k) In the event of inconsistency between the two compared checksums, requesting of visualisation information (5) representing the current data model (3) from the operator station server (2) by the display unit (6),
l) Transferring of the visualisation information (5) representing the current data model (3) from the operator station server (2) to the display unit (6) and graphical presentation of the visualisation information (5).

2. Method according to claim 1, in which a "message-digest algorithm 5" is used in each case for generation of the checksums by the display unit (6) and the operator station server (2).

3. Control system (16) for a technical plant, in particular a manufacturing or process plant, which has at least one operator station server (2) and one operator station client (4), wherein a data model (3) is implemented on the operator station server (2), wherein the data model (3) features a linkage of different data which is combined in a common model, and wherein the operator station client (4) has a display unit (6) and a control unit (8), and wherein the control system is designed to carry out the method of claim 1.

4. Control system according to claim 3, in which the display unit (6) and the operator station server (2) are designed to use a "message-digest algorithm 5" in each case for generation of the checksums by the display unit (6) and the operator station server (2).

5. Technical plant, in particular a manufacturing or process plant, having at least one control system (16) according to one of claims 3 or 4.

## Revendications

1. Procédé pour faire fonctionner un système (16) de commande d'une installation technique, notamment d'une installation de fabrication ou de processus, qui a au moins un operator station server (2) et un operator station client (4), dans lequel il est mis en oeuvre, sur l'operator station server (2), un modèle (3) de donnée, dans lequel le modèle (3) de donnée représente une combinaison de diverses données, qui sont rassemblées en un modèle commun et dans lequel l'operator station client (4) a une unité (6) d'affichage et une unité de commande, comprenant :
a) transmission d'informations (5) de visualisation représentant le modèle (3) de données à l'unité (6) de l'operator station client (4) par l'operator station server (2),
b) production d'une présentation graphique des informations (5) de visualisation reçues à un opérateur du système (16) de commande par l'unité (6) d'affichage de l'operator station client (4),
c) réception d'instructions de l'opérateur, qui doivent effectuer une modification de la présentation graphique dans l'unité (6) d'affichage et acheminement de ces instructions (7) à l'unité (8) de commande par l'unité (6) d'affichage,
d) réception des instructions (7) de l'unité (6) d'affichage par l'unité (8) de commande,
e) production d'informations (9) de visualisation révisées, à partir des instructions (7) reçues et transmission directe des informations (9) de visualisation révisées à l'unité (6) d'affichage par l'unité (8) de commande, pour adapter la présentation graphique de l'unité (6) d'affichage,
f) production d'instructions (10) d'adaptation à partir des instructions (7) reçues et transmission directe au modèle (3) de donnée sur l'operator station server (2) par l'unité (8) de commande, afin que l'operator station server (2) adapte le modèle (3) de donnée en réaction aux instructions (7) de l'opérateur,
g) production d'une somme de contrôle spécifique à la présentation graphique en cours par l'unité (6) d'affichage, après que l'unité (6) d'affichage a reçu, de l'unité (8) de commande, les informations (5) de visualisation révisées et a adapté en conséquence la présentation graphique,
h) production d'une somme de contrôle spécifique pour le modèle (3) de données en cours par l'operator station server (2), après que l'operator station server (2) a reçu, de l'unité (8) de commande, les instructions (10) d'adaptation et a adapté en conséquence le modèle (3) de données,
i) transmission de la somme de contrôle de l'operator station server (2) à l'unité (6) d'affichage,
j) comparaison de la somme de contrôle produite par l'unité (6) d'affichage à la somme de contrôle produite par l'operator station server (2) afin de pouvoir détecter une incohérence éventuelle entre la présentation graphique de l'unité (6) d'affichage et le modèle (3) de donnée sur l'operator station server (2),
k) dans le cas d'une incohérence entre les deux sommes de contrôle comparées entre elles, demande d'informations (5) de visualisation, qui représentent le modèle (3) de donnée en cours, de l'operator station server (2) par l'unité (6) d'affichage,
l) transmission des informations (5) de visualisation, qui représentent le modèle (3) de donnée en cours de l'operator station server (2) à l'unité (6) d'affichage et présentation graphique des informations (5) de visualisation.

2. Procédé suivant la revendication 1, dans lequel, lors de la production des sommes de contrôle par l'unité (6) d'affichage et l'operator station server (2), on utilise respectivement un « message-digest algorithm 5 ».

3. Système (16) de commande d'une installation technique, notamment d'une installation de fabrication ou de processus, qui a au moins un operator station server (2) et un operator station client (4), dans lequel il est mis en oeuvre, sur l'operator station server (2), un modèle (3) de donnée, dans lequel le modèle (3) de donnée représente une combinaison de diverses données, qui sont rassemblées en un modèle commun et dans lequel l'operator station client (4) a une unité (6) d'affichage et une unité (8) de commande, et dans lequel le système de commande est constitué pour effectuer le procédé suivant la revendication 1.

4. Système de commande suivant la revendication 3, dans lequel l'unité (6) d'affichage et l'operator station server (2) sont constitués pour utiliser, lors de la production des sommes de contrôle par l'unité (6) d'affichage et par l'operator station server (2), respectivement un « message-digest algorithm 5 ».

5. Installation technique, notamment installation de fabrication ou de processus, comprenant un système (16) de commande suivant l'une des revendications 3 ou 4.
